(19) Europäisches Patentamt
European Patent Office
Office européen des brevets

(11) **EP 3 974 202 A1**

(12) **EUROPEAN PATENT APPLICATION**

(43) Date of publication:
**30.03.2022 Bulletin 2022/13**

(21) Application number: **21201649.7**

(22) Date of filing: **04.08.2017**

(51) International Patent Classification (IPC):
**B42D 25/324** *(2014.01)* **B42D 25/373** *(2014.01)*
**B42D 25/425** *(2014.01)*

(52) Cooperative Patent Classification (CPC):
**G02B 30/00; B42D 25/324; B42D 25/373;**
**B42D 25/425; G02B 30/60; G09F 19/12**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2016 JP 2016155098**

(62) Document number(s) of the earlier application(s) in
accordance with Art. 76 EPC:
**17837100.1 / 3 496 077**

(71) Applicant: **Toppan Printing Co., Ltd.**
**Tokyo 110-0016 (JP)**

(72) Inventor: **SUGIHARA, Keitaro**
**Tokyo, 110-0016 (JP)**

(74) Representative: **TBK**
**Bavariaring 4-6**
**80336 München (DE)**

Remarks:
This application was filed on 08-10-2021 as a
divisional application to the application mentioned
under INID code 62.

(54) **DISPLAY BODY**

(57) Display regions each include a plurality of reflection surfaces. The reflection surfaces are arranged at an average pitch of 1 μm and 300 μm inclusive in a direction in which the reflection surfaces are arranged. The display regions of each display region group include display regions that differ from one another in the normal direction of the reflection surfaces. Each display region group is configured to form, in the associated observation direction, an image that is unique to the display region group and composed of the image elements formed by the display regions of the display region group.

Fig.4

EP 3 974 202 A1

## Description

TECHNICAL FIELD

The present disclosure relates to a display body that displays an image through reflection of light.

BACKGROUND ART

Certification documents, securities, banknotes, and other objects are required to be counterfeit-resistant. Techniques to increase difficulty in counterfeiting an object include attaching a counterfeit-resistant display body to the object (see Patent Document 1, for example).

PRIOR ART DOCUMENT

Patent Document

Patent Document 1: Japanese National Phase Laid-Open Patent Publication No. 2008-547040

SUMMARY OF THE INVENTION

Problems that the Invention is to Solve

Techniques to analyze such display bodies have been advanced to develop counterfeit-resistant structures. Techniques to manufacture display bodies have also been diversified to achieve counterfeit-resistant structures. However, the advanced techniques to analyze display bodies make it easier to analyze a display body to counterfeit the display body, and the diversified techniques to manufacture display bodies also facilitate manufacturing of counterfeit products. Thus, elements of display bodies are increasingly sought to have new structures. In particular, there is a high demand for techniques to improve aesthetic appearances of display bodies.

It is an objective of the present disclosure to provide a display body with an improved aesthetic appearance.

Means for Solving the Problems

To achieve the foregoing objective, a display body is provided that includes a display surface including one or more display region groups, each including a plurality of display regions. Each display region includes a plurality of reflection surfaces that is configured to reflect light incident on the display surface toward an area including a corresponding one of observation directions that are associated with the respective display region groups. The reflection surfaces are arranged at an average pitch of 1 $\mu$m and 300 $\mu$m inclusive in a direction in which the reflection surfaces are arranged. In each display region, the reflection surfaces have an identical normal direction associated with the display region so that the reflection surfaces of the display region are configured to form a single image element associated with the display region. The display regions of each display region group include display regions that differ from one another in the normal direction of the reflection surfaces. Each display region group is configured to form, in the associated observation direction, an image that is unique to the display region group and composed of the image elements formed by the display regions of the display region group.

In this configuration, each display region forms an image element formed by the light emerging from the reflection surfaces belonging to the display region. The image element is formed by the light emerging from a virtual plane covering the entire display region. Display regions that differ from one another in the normal direction of the reflection surfaces form image elements of mutually different light intensities in the observation direction. The display region group thus displays in the observation direction an image composed of image elements, which have light intensities according to the normal directions of the reflection surfaces of the respective display regions. This improves the aesthetic appearance of the display body.

In the above-described display body, the reflection surfaces are preferably arranged at a constant pitch in the direction in which the reflection surfaces are arranged, and the pitch at which the reflection surfaces are preferably arranged is between 1 $\mu$m and 300 $\mu$m inclusive.

In this configuration, the pitch of the reflection surfaces is greater than or equal to 1 $\mu$m, so that the reflection surfaces are less likely to produce diffracted light. Further, since the pitch P is greater than or equal to 300 $\mu$m, the observer of the display body is unlikely to recognize the reflection surfaces. In addition, since the reflection surfaces are at a constant pitch, the advantage obtained by a pitch P of between 1 $\mu$m and 300 $\mu$m inclusive is achieved over the entire display regions, as compared with a structure in which the reflection surfaces are arranged at different pitches. As such, the image displayed by the display body is more likely to be perceived as the collection of the image elements formed by the respective display regions.

In the above-described display body, each reflection surface preferably has a height that is a maximum value of a distance between the reflection surface and the display surface. In each display region, the height of each reflection surface is preferably equal to the heights of the other reflection surfaces.

This configuration facilitates the formation of a plurality of reflection surfaces in each display region, as compared with a display region in which reflection surfaces have different heights.

In the above-described display body, each display region is preferably polygonal in a plan view of the display surface.

This configuration allows the image displayed by the display body to be formed of a combination of polygonal image elements. This helps the image formed by the display body to be perceived as an image representing the curves of a three-dimensional object.

In the above-described display body, the display body preferably includes a multilayer interference layer that has a plurality of dielectric layers. Adjacent ones of the dielectric layers that are in contact with each other in a direction in which the dielectric layers are preferably layered have different refractive indices so that the multilayer interference layer is configured to reflect light having a certain wavelength, and the multilayer interference layer preferably has a surface that includes the reflection surfaces.

This configuration allows the display body to display an image having a color corresponding to the wavelength of the light reflected by the multilayer interference layer.

In the above-described display body, the display surface preferably includes a plurality of pixels, and each display region is preferably one of the pixels.

This configuration allows the structure of each display region to be designed based on a raster image.

EFFECTS OF THE INVENTION

The present disclosure improves the aesthetic appearance of a display body.

BRIEF DESCRIPTION OF THE DRAWINGS

Fig. 1 is a plan view showing the planar structure of a display body of an embodiment.
Fig. 2 is an enlarged plan view showing a display region group.
Fig. 3 is a perspective view showing the structure of a reflection element of a display region.
Fig. 4 is a perspective view showing the structure of a plurality of reflection elements of a display region.
Fig. 5 is a cross-sectional view showing the structure of the reflection elements of the display region.
Fig. 6 is a diagram for illustrating the operation of the reflection surfaces of the display region.
Fig. 7 is a diagram for illustrating the operation of a display body.
Fig. 8 is a schematic view showing the relationship between an incident angle and an emergence angle at an example of a reflection surface.
Fig. 9 is a schematic view showing the relationship between an incident angle and an emergence angle at an example of a reflection surface.
Fig. 10 is a perspective view showing the structure of an example of a reflection element.
Fig. 11 is a perspective view showing the structure of an example of a reflection element.
Fig. 12 is a schematic view showing the relationship between an incident angle and a diffraction angle at an example of a reflection element.
Fig. 13 is a schematic view showing the relationship between an incident angle and a diffraction angle at an example of a reflection element.
Fig. 14 is a cross-sectional view showing the cross-sectional structure of a display region of a display body of a modification.
Fig. 15 is a cross-sectional view showing the cross-sectional structure of a display region of a display body of a modification.
Fig. 16 is a perspective view showing the structure of a reflection surface of a display body of a modification.
Fig. 17 is a cross-sectional view showing the cross-sectional structure of a display region of a display body of a modification.

MODES FOR CARRYING OUT THE INVENTION

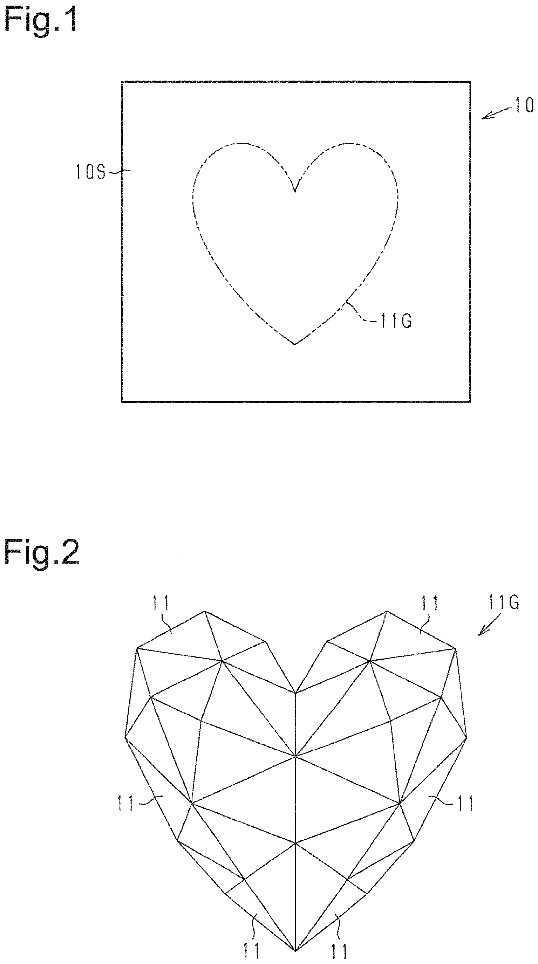

Referring to Figs. 1 to 13, an embodiment of a display body is now described. In the following descriptions, the structure of the display body, the operation of the display body, and then a method for manufacturing the display body are described.

[Structure of Display Body]

Referring to Figs. 1 to 6, the structure of the display body is now described.

As shown in Fig. 1, a display body 10 have a display surface 10S including one display region group 11G. The display region group 11G forms an image unique to the display region group 11G in a single observation direction associated with the display region group 11G.

The image unique to the display region group 11G is displayed on the display surface 10S of the display body 10. The display surface 10S includes only one display region group 11G. However, the display surface 10S may include a plurality of display region groups 11G, and the images unique to the respective display region groups 11G may be displayed on the display surface 10S. That is, the display surface 10S may display a plurality of images. The display surface 10S may be flat or curved.

In a plan view of the display surface 10S, the display region group 11G has a heart shape. The shape of the display region group 11G may be any of a character, a graphics, a symbol, and an illustration. In a plan view of the display surface 10S, the outline of the display region group 11G is substantially identical with the outline of the image formed by the display region group 11G.

As shown in Fig. 2, the display region group 11G includes a plurality of display regions 11. Each display region 11 has a polygonal shape in a plan view of the display surface 10S. Each display region 11 may have a triangular shape, which is an example of a polygonal shape. The shape of each display region 11 is not limited to a triangular shape and may be a quadrangular shape, or a pentagonal shape. In the display region group 11G, the plurality of display regions 11 may include display regions 11 of different shapes. In this case, the shapes of the display regions 11 may include two or more different types of polygonal shapes, such as a triangular shape, a quadrangular shape, and a pentagonal shape.

The plurality of display regions 11 of the display region group 11G includes different types of display regions 11 that differ from one another in at least one of shape and size. In the display region group 11G, each display region 11 is in contact with adjacent display regions 11. That is, in the display region group 11G, two adjacent display regions 11 share one of the sides defining the display regions 11.

The image displayed by the display body 10 is a vector image, which is represented by a collection of regions represented by vectors, in other words, display regions 11.

Each display region 11 preferably has an area that allows the observer of the display body 10 to perceive the display region 11. The area of each display region 11 is preferably between 0.1 mm² and 0.5 mm² inclusive, for example.

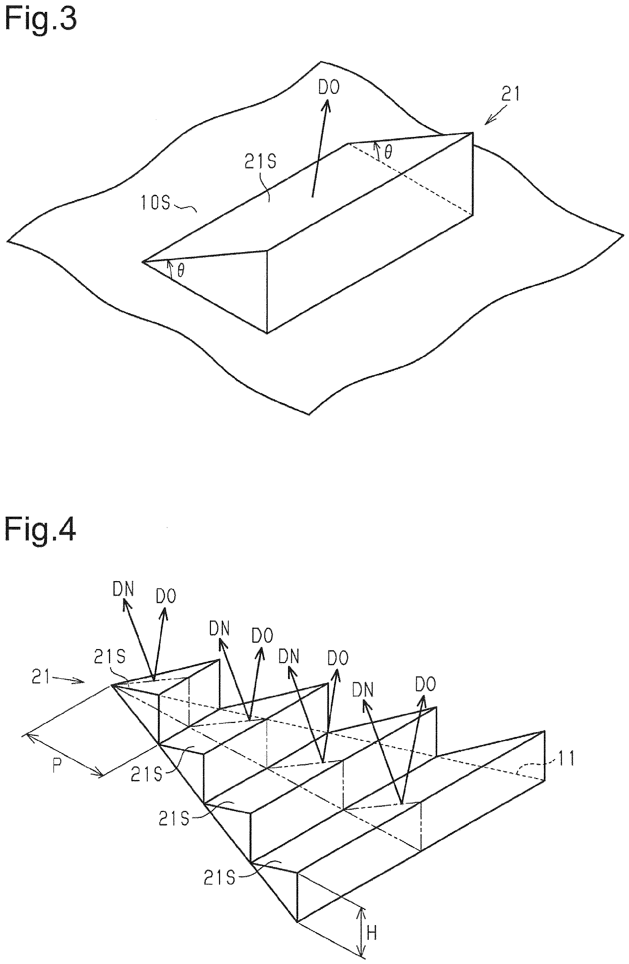

Referring to Fig. 3, each display region 11 includes reflection elements 21 each including one reflection surface 21S. Each reflection element 21 extends in one direction along the two-dimensional plane in which the display surface 10S extends. The reflection surface 21S is an optical surface extending along a plane intersecting with the display surface 10S. An inclination angle θ is formed by the reflection surface 21S and the display surface 10S. The inclination angles θ of the display region 11 are uniform, and the inclination angles θ are typically constant. Each reflection surface 21S is a specular surface, which specularly reflects visible light. The light incident on the reflection surface 21S is regularly reflected in a direction corresponding to the inclination angle θ.

The angle formed by the normal direction of the reflection surface 21S and the traveling direction of the light incident on the reflection surface 21S is the incident angle of light. The incident angles of the incident light on the reflection surfaces 21S are in a given range. Each reflection surface 21S is shaped so as to reflect the light that is incident on the reflection surface 21S. In addition, each reflection surface 21S is shaped such that the reflection angle of light emerging from the reflection surface 21S, or the emergence angle, corresponds to the observation direction DO, which is common to multiple reflection surfaces 21S.

Each reflection element 21 may be a projection forming a triangular prism on the display surface 10S, or may be a depression having a reflection surface 21S in the display surface 10S. The reflection surface 21S may be a flat or non-flat surface forming an inclination angle θ with the display surface 10S. A non-flat reflection surface 21S may be a surface including minute projections and depressions or may be a curved surface. The inclination angle θ of a non-flat reflection surface 21S may be the inclination angle of a flat reference surface that approximates the non-flat reflection surface 21S.

The reflection surface 21S of each reflection element 21 may be the surface of a multilayer interference layer. The multilayer interference layer includes a plurality of dielectric layers. Adjacent dielectric layers that are in contact with each other in the direction in which the dielectric layers are layered have different refractive indices, allowing the multilayer interference layer to reflect light having a certain wavelength. In other words, the display body 10 may include a multilayer interference layer, and the multilayer interference layer may include the reflection surfaces 21S of reflection elements 21.

This allows the display body 10 to display an image having a color corresponding to the wavelength of the light reflected by the multilayer interference layer.

Adjacent dielectric layers in the multilayer interference layer have different refractive indices, so that the light incident on the multilayer interference layer is reflected at each interface between dielectric layers. The interference between the light rays reflected at different interfaces intensifies or weakens the light rays of given wavelengths. The multilayer interference layer thus produces light of a certain wavelength.

For example, the multilayer interference layer may include a plurality of lamination units, each including one high refractive index layer and one low refractive index layer. The high refractive index layer may be made of tantalum oxide, and the low refractive index layer may be made of silicon oxide.

As shown in Fig. 4, each display region 11 includes a plurality of reflection surfaces 21S. Each reflection surface 21S reflects the incident light on the display surface 10S toward an area including a single observation direction DO associated with the display region group 11G. The reflection surfaces 21S are arranged at a pitch P of between 1 μm and 300 μm inclusive in the direction in which the reflection surfaces 21S are arranged. In addition to the plurality of reflection surfaces 21S, each display region 11 typically includes vertical surfaces, inclined surfaces, flat surfaces, and scattering surfaces. The vertical surfaces and the inclined surfaces connect the reflection surfaces 21S to the display surface 10S, and the flat surfaces and the scattering surfaces are located in the regions that are free of reflection surfaces 21S in a plan view of the display surface 10S. When the reflection surfaces 21S are connected to the display surface 10S by vertical surfaces, the areas of the reflection surfaces 21S in the display region 11 are maximized. When the display regions 11 include inclined surfaces or flat surfaces, the areas of the reflection surfaces 21S may be varied by varying the angles of the inclined surfaces or the areas of the flat surfaces in display regions 11. Scattering surfaces in a display region 11 allow the areas of the reflection surfaces 21S to vary and also enable the display region 11 to produce scattering light in a direction that differs from the reflection surfaces 21S. The variation

7      EP 3 974 202 A1      8

in area of the reflection surfaces 21S of display regions 11 results in different amounts of light reflected at the display regions 11.

Further, the display body may include a display region 11 that has vertical surfaces and a display region 11 that has inclined surfaces, flat surfaces, or scattering surfaces. This allows the areas of the reflection surfaces 21S in display regions 11 to vary, enabling the display regions 11 to produce different amounts of reflection light. This adds variety to the expression.

The pitch P of the display body 10 is greater than or equal to 1 $\mu$m, so that the reflection surfaces 21S do not produce diffracted light. As such, the image displayed by the display body 10 is formed by white light that is regularly reflected by the reflection surfaces 21S. In addition, the pitch P is less than or equal to 300 $\mu$m and therefore smaller than the resolution of human eyes. The reflection surfaces 21S of the display regions 11 are unlikely to be recognized by the observer of the display body 10.

Further, the reflection surfaces 21S may be arranged at a constant pitch P. In this case, the advantage obtained by a pitch P of between 1 $\mu$m and 300 $\mu$m inclusive is achieved over the entire display regions 11, as compared with a structure in which the reflection surfaces 21S are at different pitches P. As such, the image displayed by the display body 10 is more likely to be perceived as the collection of the image elements formed by the respective display regions 11.

In each display region 11, the reflection surfaces 21S have an identical normal direction DN associated with the display region 11. Each reflection surface 21S reflects light in the observation direction DO. In one display region 11, the normal direction DN of a reflection surface 21S is identical with the normal directions DN of the other reflection surfaces 21S. In a plan view of a display region 11, the normal direction DN of a reflection surface 21S is the direction in which the reflection surface 21S is oriented.

A display region group 11G includes display regions 11 that differ from one another in the normal direction DN of the reflection surfaces 21S. That is, one display region group 11G includes various normal directions DN of reflection surfaces 21S. In other words, a plurality of display regions 11 includes display regions 11 that differ from one another in the normal direction DN of the reflection surfaces 21S.

As described above, in a plan view of the display surface 10S, each display region 11 is triangular. The sides of a display region 11 are shared with three other display regions 11 surrounding the display region 11. The normal direction DN of the reflection surfaces 21S of a display region 11 is preferably different from the normal directions DN of the reflection surfaces 21S of the display regions 11 that share sides with the display region 11. Among a display region 11 and the three display regions 11 sharing the sides of the display region 11, at least two display regions 11 may have reflection surfaces 21S that are identical in normal direction DN.

That is, a display region 11 preferably differs from the display regions 11 surrounding the display region 11 in the normal direction DN of the reflection surfaces 21S. This enables the image formed by the display body 10 to be easily perceived as a three-dimensional image. In addition, a normal direction DN of the reflection surfaces 21S of each display region 11 is preferably within the group of the normal directions DN of the reflection surfaces 21S of the plural display regions 11 surrounding the display region 11. Namely, the normal direction DN can be expressed as a sum of the normal directions DN of the group. When the normal direction DN is the sum of the normal directions DN of the group, the coefficients of the normal directions DN are positive values. This allows the display body 10 to display a more natural three-dimensional image. Not all the display regions 11 of the display body 10 do not have to satisfy the conditions described above as long as some of the display regions 11 satisfy the conditions.

In each reflection element 21, the height H of the reflection surface 21S is the maximum value of the distance between the reflection surface 21S and the display surface 10S, or the section of the display region 11 that serves as the display surface 10S. In each display region 11, the height H of a reflection surface 21S may be equal to the height H of the other reflection surfaces 21S.

When all the reflection surfaces 21S in a display region 11 have the same height H, it is easy to form reflection surfaces 21S in the display region 11, as compared with a structure in which reflection surfaces 21S have different heights H.

In addition, when all reflection surfaces 21S have the same height H, the reflection surfaces 21S are likely to be shaped with high accuracy in the step of forming the reflection surfaces 21S.

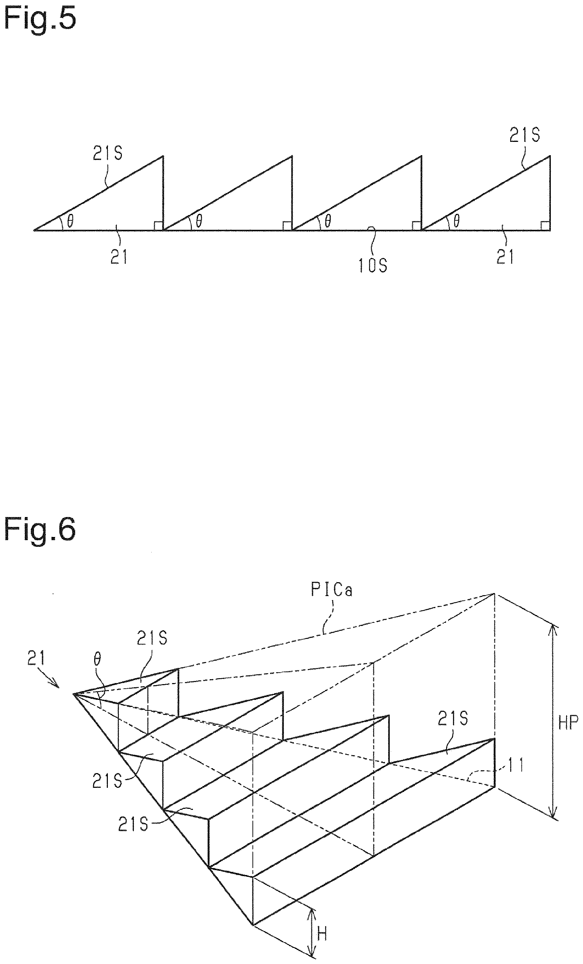

Fig. 5 shows the cross-sectional structure of reflection elements 21 in a plane defined by the direction in which the reflection elements 21 are arranged and the height direction of the reflection elements 21.

As shown in Fig. 5, one display region 11 includes the four reflection elements 21 arranged in one direction. As described above, the four reflection elements 21 are equal in inclination angle $\theta$ and height. In the cross section along the plane defined by the direction in which the reflection elements 21 are arranged and the height direction of the reflection elements 21, each reflection element 21 has the shape of a regular triangle.

Referring to Fig. 6, in the display region 11, the normal directions DN of the reflection surfaces 21S are identical and associated with the display region 11. Accordingly, the reflection surfaces 21S reflect light in the observation direction DO, so that the reflection surfaces 21S of the display region 11 form one image element PICa associated with the display region 11.

The reflection surfaces 21S of the display region 11 form one image element PICa, which has the shape

5

of the collection of the reflection surfaces 21S combined in the direction in which the reflection surfaces 21S are arranged. That is, the area of the image element PICa is equal to the sum of the areas of the reflection surfaces 21S, and the inclination angle θ between the image element PICa and the display region 11, or the display surface 10S, is equal to the inclination angle θ between the reflection surfaces 21S and the display surface 10S. Further, the height HP of the image element PICa is the maximum value of the distance between the image element PICa and the display surface 10S. The height HP is equal to the value obtained by multiplying the height H of a reflection surface 21S by the number of the reflection surfaces 21S.

Each display region 11 forms one image element PICa, which is formed by the light emerging from the reflection surfaces 21S of the display region 11. The image element PICa is formed by the light emerging from a virtual plane, which covers the entire display region 11 and forms a predetermined angle with the display region 11.

The pitch P of the reflection surfaces 21S is greater than or equal to 1 μm, so that the reflection surfaces 21S do not produce diffracted light. This facilitates the formation of one image element PICa by the light emerging from the reflection surfaces 21S. In addition, the pitch P of the reflection surfaces 21S is less than or equal to 300 μm, so that each reflection surface 21S itself is unlikely to be recognized by the observer. The observer can therefore easily perceive the image element PICa.

The display region 11 shown in Figs. 4 to 6 includes four reflection elements 21. However, the number of reflection elements 21, or reflection surfaces 21S, in one display region 11 may be less than or equal to 3, or greater than or equal to 5. The display regions 11 forming the display region group 11G may include display regions 11 that vary in the number of reflection surfaces 21S.

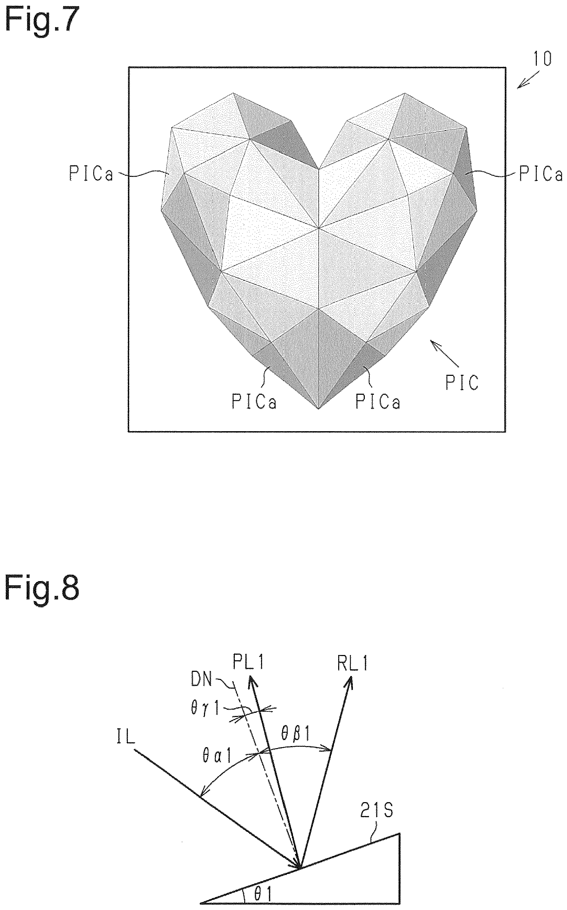

[Working of Display Body] Referring to Figs. 7 to 13, the operation of the display body is now described. In Fig. 7, the intensity of light in the image formed by the display region group 11G is expressed by the gradation of colors of the display region group 11G. In this gradation of colors of the image in Fig. 7, a section in the image with a lower light intensity has a darker color.

As shown in Fig. 7, when light is incident on the display surface 10S of the display body 10 from a given direction, a plurality of reflection surfaces 21S of the display region group 11G forms a heart-shaped image PIC in the observation direction DO.

The display regions 11 of the display region group 11G each form a single image element PICa. The normal direction DN of the reflection surfaces 21S in each display region 11 is unique to the display region 11. The normal direction DN of the reflection surfaces 21S in each display region 11 determines the intensity per unit area of the light emerging from the reflection surfaces 21S in the observation direction DO. That is, the intensity of light of each image element PICa depends on the normal direction DN of the reflection surfaces 21S forming the image element PICa.

[Relationship between Light Amount and Normal Direction of Reflection Surface]

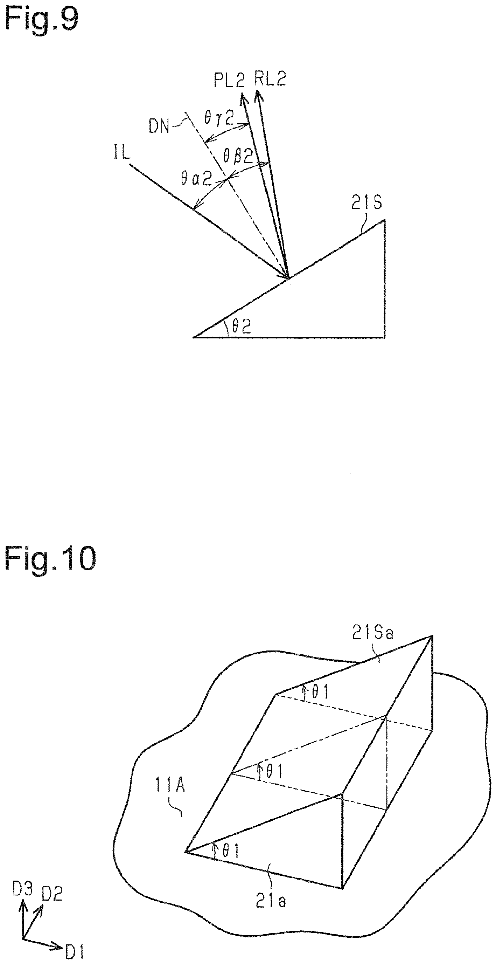

With reference to Figs. 8 and 9, the relationship between the normal direction DN of a reflection surface 21S and the amount per unit area of the light emerging from the reflection surface 21S is now described in detail. Fig. 8 shows an example of a reflection surface 21S of a display region 11. The reflection surface 21S and the display region 11 form a first inclination angle θ1. Fig. 9 shows an example of a reflection surface 21S of another display region 11. The reflection surface 21S and the display region 11 form a second inclination angle θ2. The second inclination angle θ2 is larger than the first inclination angle θ1.

As shown in Fig. 8, incident light IL is incident from a given direction onto the reflection surface 21S having the first inclination angle θ1. The incident angle of the incident light IL is formed by the direction of the incident light IL and the normal direction DN of the reflection surface 21S. The emergence angle is formed by the normal direction DN and the emergent light emerging from the reflection surface 21S.

The incident angle of the incident light IL on the reflection surface 21S is a first incident angle θα1, and the emergence angle of first regular reflection light RL1 at the reflection surface 21S is a first emergence angle θβ1. The first incident angle θα1 is equal to the first emergence angle θβ1. Of the light reflected at the reflection surface 21S, the light emerging in the observation direction DO is a first light component PL1, and the emergence angle of the first light component PL1 is a first emergence angle θγ1.

As shown in Fig. 9, on the reflection surface 21S having the second inclination angle θ2, the incident angle of incident light IL is a second incident angle θα2, which is smaller than the first incident angle θα1. The emergence angle of second regular reflection light RL2 at the reflection surface 21S is a second emergence angle θβ2. The second emergence angle θβ2 is equal to the second incident angle θα2 and therefore smaller than the first emergence angle θβ1. Of the light reflected at the reflection surface 21S, the light emerging in the observation direction DO is a second light component PL2, and the emergence angle of the second light component PL2 is a second emergence angle θγ2.

When a light component emerges from a reflection surface 21S in a given direction, the smaller the difference between the emergence angle of the light component and the emergence angle of the regular reflection light, the larger the amount of light per unit area of the light component. The difference between the first emergence angle θβ1 and the first emergence angle θγ1 at the reflection surface 21S having the first inclination angle θ1 is larger than the difference between the second emergence angle θβ2 and the second emergence angle θγ2 at the reflection surface 21S having the second inclination angle θ2. As such, the first light component PL1 has a smaller light amount per unit area than the second light component PL2.

Consequently, in the image PIC formed by the display region group 11G, the image element PICa formed by a display region 11 including reflection surfaces 21S having the first inclination angle θ1 is brighter than the image element PICa formed by a display region 11 including reflection surfaces 21S having the second inclination angle θ2. This allows the display region group 11G to form the shaded image PIC, which is composed of image elements PICa varying in brightness, or the amount of light per unit area.

The display body 10 thus forms the single image PIC in the observation direction DO. The image PIC is composed of various image elements PICa, each having a light amount per unit area corresponding to the normal direction DN of the reflection surfaces 21S of the display region 11. The display body 10 forms the three-dimensional image composed of image elements PICa, which vary in light amount. This improves the aesthetic appearance of the display body 10.

Each display region 11 is polygonal, and the image PIC displayed by the display body 10 is formed by the combination of polygonal image elements PICa. Consequently, the image formed by the display body 10 is likely to be perceived as an image representing the curves of a three-dimensional object.

[Relationship between Azimuth Angle and Inclination Angle]

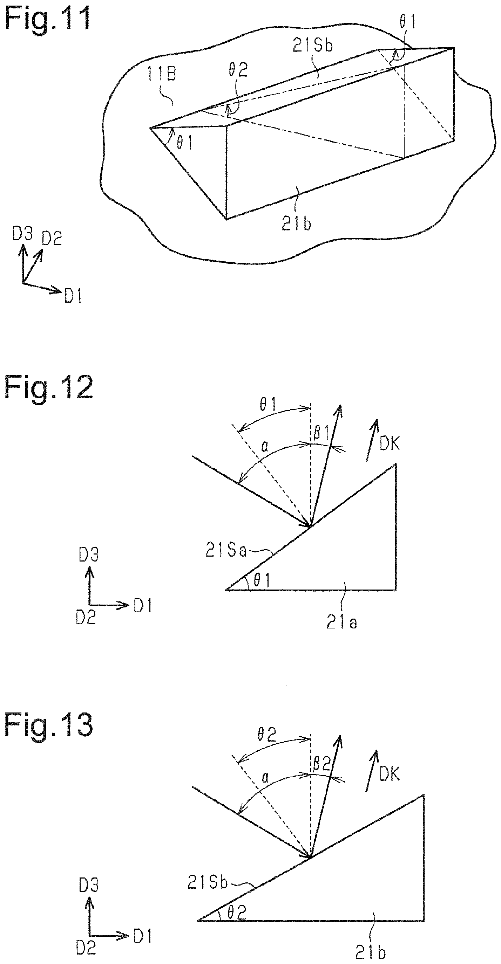

The difference in light amount between the display regions 11 can also be explained using the relationship between the azimuth angle and the inclination angle of a reflection element. Referring to Figs. 10 to 13, the relationship between the azimuth angle of a reflection element and the inclination angle formed by the reflection surface and the display surface will be described. For the convenience of illustration, Figs. 10 and 11 each show only one of the reflection elements of a display region.

Referring to Fig. 10, display regions 11 include a first region 11A. The first region 11A includes a plurality of first reflection elements 21a arranged in a first direction D1, which is a single direction. The first reflection elements 21a extend in a second direction D2, which is perpendicular to the first direction D1. A third direction D3, which is perpendicular to the first and second directions D1 and D2, is the height direction of the first reflection elements 21a. Each first reflection element 21a includes a first reflection surface 21Sa, which serves as a reflection surface.

Referring to Fig. 11, display regions 11 include a second region 11B. The second region 11B includes a plurality of second reflection elements 21b arranged in a direction intersecting with the direction in which the first reflection elements 21a are arranged. Each second reflection element 21b extends in the direction perpendicular to the direction in which the second reflection elements 21b are arranged. Each second reflection element 21b includes a second reflection surface 21Sb, which serves as a reflection surface.

The first reflection elements 21a are identical to the second reflection elements 21b in shape. In a cross section along a plane defined by the direction in which the reflection elements are arranged in each display region and the height direction of the reflection elements, the inclination angle θ of the first reflection elements 21a is equal to the inclination angle θ of the second reflection elements 21b. The first and second reflection elements 21a and 21b have the first inclination angle θ1.

On the other hand, the first reflection element 21a differs from the second reflection element 21b in the azimuth angle of the reflection surface. The azimuth angle is formed by the direction of the projection of the normal to the reflection surface onto the display surface 10S and a reference direction, which is one direction along the display surface 10S. The first reflection surface 21Sa differs from the second reflection surface 21Sb in azimuth angle. When the second reflection element 21b is rotated about a rotation axis extending in the height direction of the second reflection element 21b and passing through the centroid of the second reflection element 21b, the orientation of the second reflection element 21b becomes the same as the orientation of the first reflection element 21a.

Fig. 12 shows the cross-sectional structure of the first reflection element 21a along a plane defined by the first and third directions D1 and D3. Fig. 13 shows the cross-sectional structure of the second reflection element 21b along a plane defined by the first and third directions D1 and D3. The following descriptions are given referring to Figs. 12 and 13 simultaneously for the convenience of description.

As described above, the first reflection element 21a differs from the second reflection element 21b in azimuth angle. As shown in Figs. 12 and 13, in cross sections along the plane defined by the first and third directions D1 and D3, the first inclination angle θ1 of the first reflection element 21a differs from the second inclination angle θ2 of the second reflection elements 21b. The second inclination angle θ2 is smaller than the first inclination angle θ1. The larger the difference between the azimuth angle of the first reflection element 21a and the azimuth angle of the second reflection element 21b, the smaller the second inclination angle θ2.

The inclination angle formed by each reflection surface may be sized such that the traveling direction of diffracted light of the m-th order (m is an integer of 1 or more), which is produced by the reflection surface and has a certain wavelength, coincides with or differs from the traveling direction of the light specularly reflected by the reflection surface. When the traveling direction of the m-th order diffracted light coincides with the traveling direction of the specularly reflected light, the m-th order diffracted light travels in the reflection direction DK.

An incident angle $\alpha$ is formed by the traveling direction of incident light on the reflection surface of a reflection element and the direction of the normal to the display surface 10S. At the first reflection element 21a, the traveling direction of the m-th order diffracted light and the normal direction of the display surface 10S form a first diffraction angle $\beta1$. At the second reflection element 21b, the traveling direction of the m-th order diffracted light and the normal direction of the display surface 10S form a second diffraction angle $\beta2$. When the diffracted light produced by a reflection element has a certain wavelength $\lambda$, the incident angle $\alpha$, the diffraction angle $\beta$, and the inclination angle $\theta$ satisfy Equations (1) and (2) below. In Equation (1), m is an integer of 1 or more.

$$\sin\alpha + \sin\beta = m\lambda \quad \text{Equation (1)}$$

$$\theta = (\alpha - \beta)/2 \quad \text{Equation (2)}$$

As described above, when the inclination angle $\theta$ is sized such that the traveling direction of the m-th order diffracted light coincides with the traveling direction of the specular reflection light, the reflection surface diffracts the m-th order diffracted light having a certain wavelength $\lambda$ with high diffraction efficiency. For example, the reflection surface converts white incident light into colored light in the reflection direction DK with high conversion efficiency. As a result, the image displayed in the reflection direction DK is formed by the light diffracted with high diffraction efficiency, so that the image has increased visibility.

Assuming that light rays are incident on two reflection surfaces at the same incident angle, when the two reflection surfaces have different inclination angles, the diffracted rays produced at the reflection surfaces have different traveling directions, or reflection directions DK.

Specifically, based on Equation (2), the diffraction angle $\beta$ is obtained from Equation (3) using the inclination angle $\theta$ and the incident angle $\alpha$.

$$\beta = \alpha - 2\theta \quad \text{Equation (3)}$$

As is apparent from Equation (3), when the incident angle $\alpha$ is fixed, varying the inclination angle $\theta$ of a reflection surface varies the diffraction angle $\beta$. As described above, the first inclination angle $\theta1$ of the first reflection surface 21Sa is larger than the second inclination angle $\theta2$ of the second reflection surface 21Sb. The first diffraction angle $\beta1$ is therefore smaller than the second diffraction angle $\beta2$.

Different azimuth angles of reflection surfaces result in different inclination angles of the reflection surfaces in cross sections along the same plane. As a result, the diffracted rays that are produced at the reflection surfaces and have a certain wavelength $\lambda$ travel in different directions. Thus, the images formed by the light reflected by the reflection surfaces are displayed in different directions. Accordingly, when the observer views the display body from a given direction, the image elements PICa formed by the respective display regions 11 vary in brightness.

[Method for Manufacturing Display Body]

The method for manufacturing the display body 10 includes, for example, a step of forming an uneven structure layer and a step of forming a reflection layer on a surface of the uneven structure layer. The step of forming an uneven structure layer duplicates an uneven structure layer from an original plate, for example.

The original plate is produced by applying a photosensitive resist, or photosensitive resin, to one surface of a planar substrate, exposing a part of the photosensitive resin to a beam, and then developing the photosensitive resin. A metal stamper is produced from the original plate by electroplating, for example, and an uneven structure layer is duplicated using this metal stamper as the matrix. The metal stamper may also be obtained by cutting a metal substrate using lathe technique.

The uneven structure layer may be formed by a method such as a heat embossing method, a casting method, or a photopolymer method. The photopolymer method introduces a radiation-curing resin into the gap between a flat substrate, such as a plastic film, and the metal stamper. Then, the method cures the radiation-curing resin by radiation and removes the cured resin layer from the metal stamper together with the substrate. The photopolymer method produces reflection elements 21 with high structural accuracy, heat resistance, and chemical resistance and is thus more desirable than a pressing method and a casting method, which use a thermosetting resin.

The uneven structure layer may be made of various resins. The material of the uneven structure layer may contain at least one of a curing agent, a plasticizer, a dispersant, various leveling agents, an ultraviolet absorber, an antioxidant, a viscosity modifier, a lubricant, and a photostabilizer.

Examples of the resins include poly(methyl methacrylate) resin, polyurethane resin, fluorine resin, silicone resin, polyimide resin, epoxy resin, polyethylene resin, polypropylene resin, methacrylate resin, polymethyl pentene resin, cyclic polyolefin resin, polystyrene resin such as styrene acrylonitrile copolymer (AS resin) and acrylonitrile butadiene styrene copolymer (ABS resin), polyvinyl chloride resin, polycarbonate resin, polyester resin, polyamide resin, polyamide imide resin, polyaryl phthalate resin, polysulfone resin, polyphenylene sulfide resin, polyether sulfone resin, linethylene naphthalate resin, polyether imide resin, acetal resin, and a cellulose resin. These resins may be used independently or in combination to form the uneven structure layer.

The step of forming the reflection layer may use a physical vapor deposition method or a chemical vapor deposition method, for example. Examples of physical vapor deposition methods include a vacuum deposition method, a sputtering method, an ion plating method, and an ion cluster beam method. Examples of chemical vapor deposition methods include a plasma chemical vapor deposition method, a thermal chemical vapor deposition method, and a photochemical vapor deposition method.

Of these methods, the vacuum evaporation method and the ion plating method are preferable over the others. These methods have higher productivity and produce desirable reflection layers. The conditions for forming film in a physical vapor deposition method or a chemical vapor deposition method may be selected according to the material of the reflection layer.

The reflection layer may be made of a metal or an alloy. The metal may be aluminum, gold, silver, platinum, nickel, tin, chromium, or zirconium, and the alloy may be an alloy of these metals. Further, when the reflection layer is the multilayer interference layer described above, the dielectric layers forming the reflection layer may be made of zinc oxide or zinc sulfide, for example. The reflection layer is preferably made of aluminum or silver since they have higher reflectivities for the visible light region than other materials.

The display body of the above-described embodiment has the following advantages.

(1) The single image PIC is formed in the observation direction DO by a plurality of image elements PICa, each having a light intensity corresponding to the normal direction DN of the reflection surfaces 21S of the display region 11. This improves the aesthetic appearance of the display body 10.

(2) The reflection surfaces 21S are arranged at a pitch P of greater than or equal to 1 $\mu$m, so that the reflection surfaces 21S are unlikely to produce diffracted light. Further, since the pitch P is greater than or equal to 300 $\mu$m, the observer of the display body 10 is unlikely to recognize the reflection surfaces 21S.

(3) When the reflection surfaces 21S are arranged at a constant pitch P, the advantage obtained by a pitch P of between 1 $\mu$m and 300 $\mu$m inclusive is achieved over the entire display regions 11, as compared with a configuration in which the pitch P of the reflection surfaces 21S is varied. As such, the image PIC displayed by the display body 10 is more likely to be perceived as the collection of the image elements PICa formed by the respective display regions 11.

(4) As compared with a configuration in which the reflection surfaces 21S in each display region 11 have different heights H, a plurality of reflection surfaces 21S is easily formed in each display region 11.

(5) Each display region 11 is polygonal, and the image PIC of the display body 10 is formed by the combination of the polygonal image elements PICa. This helps the image PIC formed by the display body 10 to be perceived as an image representing the curves of a three-dimensional object.

(6) When the reflection surface 21S is the surface of a multilayer interference layer, the display body 10 can display an image PIC that has the color according to the wavelength of light reflected by the multilayer interference layer.

The above-described embodiment may be modified as follows.

The display surface 10S may include a plurality of pixels, and each display region 11 may be a single pixel. The plurality of pixels may be arranged on the display surface 10S in a matrix. The image displayed by the display body 10 is not limited to a vector image and may be a raster image composed of repeated pixels, which are unit regions.

This configuration has the following advantage.

(7) The structure of each display region may be designed based on a raster image.

The shape of each display region 11 is not limited to polygonal and may be a shape defined by a curve or a shape defined by a curve and a straight line. A shape defined by a curve may be a circular shape or an elliptical shape, and a shape defined by a curve and a straight line may be a semicircular shape or a semi-elliptical shape. A plurality of display regions may include, in addition to a display region having a polygonal shape, at least one of a display region having a shape defined by a curve and a display region having a shape defined by a curve and a straight line. Alternatively, the plurality of display regions may include both of a display region having a shape defined by a curve and a display region having a shape defined by a curve and a straight line.

This structure achieves an advantage equivalent to advantage (1) as long as the normal directions of the reflection surfaces of each display region are identical, each display region forms a single image element associated with the display region, and the display body forms in the observation direction an image that is unique to the display body and composed of a plurality of image elements.

In a display region 11, the reflection elements 21 may be identical in inclination angle $\theta$ but vary in height H. This configuration achieves an advantage equivalent to advantage (1) as long as the normal directions of the reflection surfaces of each display region are identical, each display region forms a single image element associated with the display region, and the display body forms in the observation direction an image that is unique to the display body and composed of a plurality of image elements.

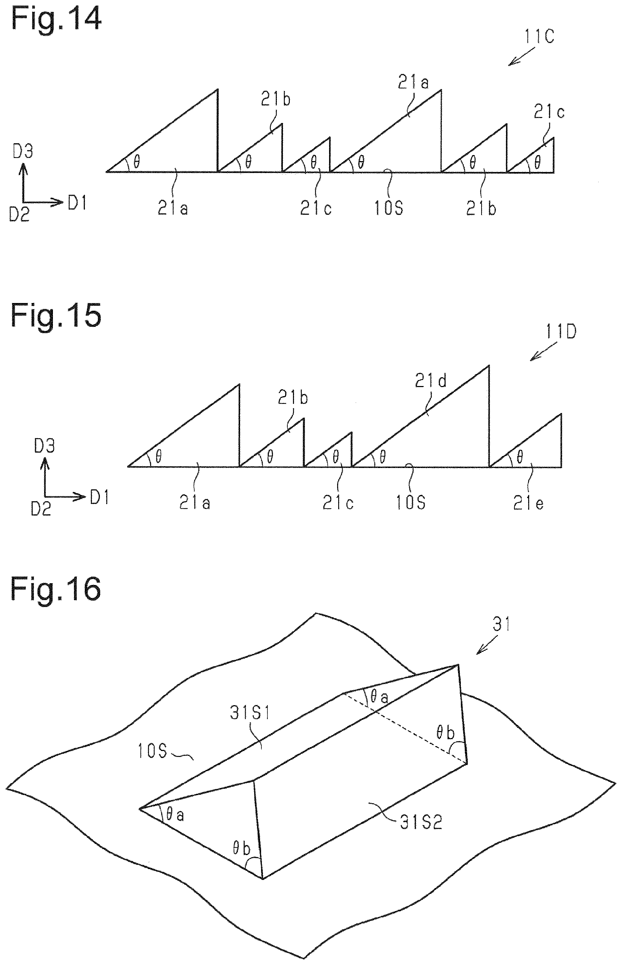

Referring to Figs. 14 and 15, this configuration is described in detail. Figs. 14 and 15 each show the cross-sectional structure of reflection elements of a display region 11 in a plane defined by the first direction D1, in which the reflection elements are arranged, and the third direction D3, which is the height direction of the reflection elements.

Fig. 14 shows a display region 11C that includes first reflection elements 21a, second reflection elements 21b, and third reflection elements 21c. The first to third reflection elements 21a, 21b and 21c have the same inclination angle θ. On the other hand, a first reflection element 21a, a second reflection elements 21b, and a third reflection element 21c have oblique sides of mutually different lengths in a cross section along a plane defined by the first and third directions D1 and D3. In other words, the reflection elements vary in the length in the first direction D1 and the length in the third direction D3.

In the first direction D1, the width of the first reflection elements 21a is the largest, and the width of the third reflection elements 21c is the smallest. The width of the second reflection elements 21b is between the width of the first reflection elements 21a and the width of the third reflection elements 21c. In the third direction D3, the height of the first reflection elements 21a is the largest, and the height of the third reflection elements 21c is the smallest. The height of the second reflection elements 21b is between the height of the first reflection elements 21a and the height of the third reflection elements 21c.

The display region 11 includes six reflection elements. In the display region 11C, a first reflection element 21a, a second reflection element 21b, and a third reflection element 21c are arranged in this order along the first direction D1. In the display region 11C, first to third reflection elements 21a, 21b and 21c form one periodicity. This reduces the likelihood that the arrangement of reflection elements produces diffracted light, as compared with a configuration in which all the reflection elements of one display region 11C have the same width in the first direction D1.

Fig. 15 shows a display region 11D that includes a first reflection element 21a, a second reflection element 21b, a third reflection element 21c, a fourth reflection element 21d, and a fifth reflection element 21e. The first to fifth reflection elements 21a to 21e have the same inclination angle θ. On the other hand, the first to fifth reflection elements 21a to 21e have oblique sides of mutually different lengths in a cross section defined by the first and third directions D1 and D3. In other words, of the first to fifth reflection elements 21a to 21e, the width in the first direction D1 of one reflection element differs from the widths in the first direction D1 of the other reflection elements, and the height in the third direction D3 of one reflection element differs from the heights in the third direction D3 of the other reflection elements. Of the five reflection elements, the third reflection element 21c is the smallest in width in the first direction D1 and height in the third direction D3, followed by the second reflection element 21b, the fifth reflection element 21e, the first reflection element 21a, and then the fourth reflection element 21d. This configuration further reduces the likelihood that the arrangement of reflection elements produces diffracted light.

The reflection surfaces 21S do not have to be arranged at a constant pitch P, as long as the average value of the pitches P of reflection surfaces 21S is between 1 μm and 300 μm inclusive. In this configuration, the minimum value and the maximum value of the pitches P are preferably between 1 μm and 300 μm inclusive, and the mode value of the pitches P is preferably between 1 μm and 300 μm inclusive. Further, the display body may include a display region 11 in which reflection surfaces 21S are arranged at a constant pitch P and a display region 11 in which the pitch P of the reflection surfaces 21S is varied.

When the reflection surfaces 21S are arranged at an average pitch P of between 1 μm and 300 μm inclusive, the advantage obtained by a pitch P of greater than or equal to 1 μm and the advantage obtained by a pitch P of less than or equal to 300 μm can be achieved to some extent in the display regions. As such, it is still possible to have advantage (1) described above.

A reflection element 21 may include more than one reflection surface 21S and may include two reflection surfaces.

As shown in Fig. 16, a reflection element 31 may include a first reflection surface 31S1 and a second reflection surface 31S2. One side of the first reflection surface 31S1 is shared with the second reflection surface 31S2. The first reflection surface 31S1 and the display surface 10S form a first inclination angle θa, and the second reflection surface 31S2 and the display surface 10S form a second inclination angle θb. The first inclination angle θa is smaller than the second inclination angle θb. However, the first inclination angle θa may be larger than or equal to the second inclination angle θb.

In this configuration, one display region having a plurality of reflection elements 31 may form a single image element associated with the display region in the observation direction using a set of first reflection surfaces 31S1 having the same orientation or a set of second reflection surfaces 31S2 having the same orientation. Advantage (1) described above is thus achieved.

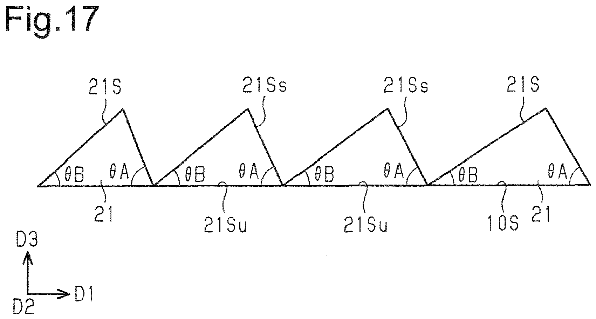

Fig. 17 shows the cross-sectional structure of reflection elements 21 along a plane defined by the first and third directions D1 and D3.

As shown in Fig. 17, each reflection element 21 includes a base surface 21Su extending along the display surface 10S and a side surface 21Ss connected to the reflection surface 21S and the base surface 21Su. The line of intersection between the side surface 21Ss and the base surface 21Su is a base surface end line, and the line of intersection between the reflection surface 21S and the base surface 21Su is a front end line. The inclination angle θ at the base surface end line, or the angle formed by the base surface 21Su and the side surface 21Ss, is a base surface inclination angle θA. The inclination angle θ at the front end line, or the angle formed by the reflection surface 21S and the base surface 21Su, is a front end inclination angle θB. In the display region 11, the base surface inclination angle θA may be larger than the front end inclination angle θB. In addition, the base surface inclination angles θA and the front end inclination angles θB may decrease monotonically in the direction from the front end line to the base surface end line of a reflection element 21. Alternatively, the base surface inclination angle θA may be smaller than the front end inclination angle θB. In addition, the base surface inclination angles θA and the front end inclination angles θB may increase monotonically in the direction from the front end line to the base surface end line of a reflection element 21.

In this configuration, the side surface 21Ss of each reflection element 21 may function as a reflection surface 21S.

Description of the Reference Numerals

10...Display body; 10S...Display surface: 11, 11C, 11D...Display region; 11A...First region; 11B...Second region; 11G...Display region group; 21, 31...Reflection element; 21a...First reflection element; 21b...Second reflection element; 21c... Third reflection element; 21d...Fourth reflection element; 21e... Fifth reflection element; 21S...Reflection surface; 21Sa, 31S1...First reflection surface; 21sb, 31S2...Second reflection surface; 21Ss...Side surface; 21Su...Base surface; PIC...Image; PICa...Image element

This application is a divisional application of European patent application no. 17 837 100.1 (the "parent application"), also published under no. EP 3 496 077 A.

**Claims**

1. A display body, comprising:

    a display surface including one or more display region groups, each including a plurality of display regions, wherein
    each display region includes a plurality of reflection surfaces that is configured to reflect light incident on the display surface toward an area including a corresponding one of observation directions that are associated with the respective display region groups,
    the reflection surfaces are arranged at an average pitch of 1 μm and 300 μm inclusive in a direction in which the reflection surfaces are arranged,
    in each display region, the reflection surfaces have an identical normal direction associated with the display region so that the reflection surfaces of the display region are configured to form a single image element associated with the display region,
    the display regions of each display region group include display regions that differ from one another in the normal direction of the reflection surfaces, and
    each display region group is configured to form, in the associated observation direction, an image that is unique to the display region group and composed of the image elements formed by the display regions of the display region group.

2. The display body according to claim 1, wherein

    the reflection surfaces are arranged at a constant pitch in the direction in which the reflection surfaces are arranged, and
    the pitch at which the reflection surfaces are arranged is between 1 μm and 300 μm inclusive.

3. The display body according to claim 1 or 2, wherein

    each reflection surface has a height that is a maximum value of a distance between the reflection surface and the display surface, and
    in each display region, the height of each reflection surface is equal to the heights of the other reflection surfaces.

4. The display body according to any one of claims 1 to 3, wherein each display region is polygonal in a plan view of the display surface.

5. The display body according to any one of claims 1 to 4, wherein

    the display body includes a multilayer interference layer that has a plurality of dielectric layers, adjacent ones of the dielectric layers that are in contact with each other in a direction in which the dielectric layers are layered have different refractive indices so that the multilayer interference layer is configured to reflect light having a certain wavelength, and
    the multilayer interference layer has a surface that includes the reflection surfaces.

6. The display body according to any one of claims 1 to 5, wherein

    the display surface includes a plurality of pixels, and
    each display region is one of the pixels.

# Fig.1

# Fig.2

Fig.3

Fig.4

## Fig.5

## Fig.6

Fig.7

Fig.8

Fig.9

Fig.10

Fig.11

Fig.12

Fig.13

Fig.14

Fig.15

Fig.16

## Fig.17

Europäisches
Patentamt

European
Patent Office

Office européen
des brevets

# EUROPEAN SEARCH REPORT

Application Number

EP 21 20 1649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 061749 A1 (GIESECKE & DEVRIENT GMBH [DE]) 5 July 2007 (2007-07-05) | 1-6 | INV.<br>B42D25/324<br>B42D25/373<br>B42D25/425 |
| Y | * paragraphs [0007] - [0013], [0015], [0017] *<br>* paragraphs [0040] - [0044], [0058]; figure 2 *<br>* paragraph [0057]; figure 5(f) *<br>----- | 5 | |
| Y | Rudolf L. van Renesse: "Optical Document Security (Third Edition)",<br>2005, Artech House, Boston / London,<br>XP002797376,<br>ISBN: 1-58053-258-6<br>* pages 54-56 *<br>* page 229 *<br>----- | 5 | |

TECHNICAL FIELDS
SEARCHED      (IPC)

B42D

The present search report has been drawn up for all claims

| Place of search | Date of completion of the search | Examiner |
|---|---|---|
| Munich | 17 February 2022 | Achermann, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 974 202 A1

**ANNEX TO THE EUROPEAN SEARCH REPORT
ON EUROPEAN PATENT APPLICATION NO.**

EP 21 20 1649

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2022

| Patent document cited in search report | Publication date | Patent family member(s) | Publication date |
|---|---|---|---|
| DE 102005061749 A1 | 05-07-2007 | DE 102005061749 A1 | 05-07-2007 |
| | | EP 1966769 A1 | 10-09-2008 |
| | | US 2008258456 A1 | 23-10-2008 |
| | | WO 2007079851 A1 | 19-07-2007 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008547040 A
- EP 17837100 A
- EP 3496077 A